(19) Europäisches Patentamt
European Patent Office
Office européen des brevets

(11) **EP 1 802 463 B1**

(12) **EUROPEAN PATENT SPECIFICATION**

(45) Date of publication and mention
of the grant of the patent:
**25.06.2014 Bulletin 2014/26**

(21) Application number: **05812017.1**

(22) Date of filing: **19.10.2005**

(51) Int Cl.:
*B32B 27/32* (2006.01)     *B65D 65/40* (2006.01)

(86) International application number:
**PCT/US2005/037588**

(87) International publication number:
**WO 2006/047174 (04.05.2006 Gazette 2006/18)**

(54) **PACKAGING AND DISPOSABLE ARTICLE DISPOSED THEREIN**

VERPACKUNG UND DARIN ENTSORGTER EINWEGARTIKEL

EMBALLAGE ET ARTICLE JETABLE PLACE DANS CET EMBALLAGE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **22.10.2004 US 621117 P**

(43) Date of publication of application:
**04.07.2007 Bulletin 2007/27**

(73) Proprietor: **The Procter & Gamble Company
Cincinnati, OH 45202 (US)**

(72) Inventor: **ZETHOFF, Martin
63739 Aschaffenburg (DE)**

(74) Representative: **L'Huillier, Florent Charles
Procter & Gamble Service GmbH
IP Department
Frankfurter Strasse 145
61476 Kronberg im Taunus (DE)**

(56) References cited:
**WO-A-01/00716     US-B1- 6 521 338**

## Description

Field of the Invention

The present disclosure generally relates to packaging for disposable articles and, more particularly, packaging for disposable cleaning articles having water content.

Background of the Invention

Various types of materials are known for packaging disposable cleaning articles. Typically, the materials are plastic or plastic-based films, and may include one or more layers of polypropylene, polyethylene, or other polymeric materials. In many applications, the article to be sealed has a water content. Accordingly, it is known to provide a sealed package to substantially retain the water content, thereby lengthening the shelf-life of the packaged product.

While previous packages have adequately addressed the need to retain water content, other physical characteristics of the packaging may influence a consumer's purchase of a particular product. When the cleaning article and package are provided as an article of commerce, typically only the package is capable of being viewed or touched when displayed on a store shelf. Accordingly, the appearance, feel, auditory qualities, and other characteristics of a packaged article may distinguish it from other products having similar functions or uses.

The real or perceived physical attributes of a package may convey a desired perception regarding a quality of the article enclosed therein. For example, it is desirable for body cleansing wipes to be soft and gentle to the skin. Accordingly, it may be desirable for the packaging to also convey the quality of "softness." With regard to appearance, a matte, rather than glossy, finish is associated with the concept of softness. In addition, consumers are sensitive to the amount of sound generated during handling and use of the package. By providing a package that displays both a matte appearance and reduced noise characteristics, a consumer may perceive the package and its contents as having "soft" qualities, which may desirably distinguish it from other packaged products. US 6.521.338 and WO 01 100716 disclose film layers that promote reduced noise emisson.

Summary of the Disclosure

Certain aspects of the present disclosure relate to an article of commerce having a disposable cleaning article with a water content and a package comprising a multilayer packaging film. In one embodiment, the multilayer packaging film includes at least a co-extruded vapor barrier film layer and a polymeric film layer. The polymeric film layer preferably has a melting point at least about 20 °C less than the co-extruded film layer, is laminated to the co-extruded polypropylene layer, and is sealable to form the package to enclose the disposable cleaning article. The multilayer packaging film substantially retains the water content of the disposable cleaning article and exhibits a corrected sound level of less than approximately 50 decibels at a sound level measurement frequency of approximately 3150 Hz.

According to other aspects of the disclosure, an article of commerce is provided having a disposable cleaning article with a water content and a package including a multilayer packaging film with at least a sealable layer to form the package so as to enclose the disposable cleaning article. The package has length and width dimensions and an outer surface. The multilayer packaging film on the outer surface has a reflectance of less than approximately 4 when illuminated at an incidence angle of 20° along directions parallel to each of the length dimension and the width dimension and less than approximately 30 when illuminated at an incidence angle of 60° along directions parallel to each of the length dimension and the width dimension. In addition, the package exhibits a corrected sound level of less than approximately 50 decibels at a sound level measurement frequency of approximately 3150 Hz.

Still further, the present disclosure relates to an article of commerce including a disposable cleaning article having a water content and a package comprising a multilayer packaging film. The multilayer packaging film has a co-extruded film layer comprising polypropylene and a polymeric film layer having a melting point at least about 20 °C less than the co-extruded film layer laminated to the co-extruded polypropylene layer. The polymeric film is sealable to form the package so as to enclose the disposable cleaning article. The package has length and width dimensions and an outer surface wherein the multilayer packaging film on the outer surface has a reflectance of less than approximately 4 when illuminated at an incidence angle of 20° along directions parallel to each of the length dimension and the width dimension and less than approximately 30 when illuminated at an incidence angle of 60° along directions parallel to each of the length dimension and the width dimension. The multilayer packaging film also substantially retains the water content of the disposable cleaning article and exhibits a corrected sound level of less than approximately 50 decibels at a sound level measurement frequency of approximately 3150 Hz.

According to an additional aspect of the disclosure, an article of commerce is provided having a disposable cleaning article with a water content and a package comprising a multilayer packaging film. The multilayer packaging film includes at least a co-extruded vapor barrier film layer and a polymeric film layer having a melting point at least about 20 °C less than the co-extruded film layer laminated to the co-extruded film layer. The polymeric film layer is sealable to form the package so as to enclose the disposable cleaning article, thereby substantially retaining the water content of the disposable cleaning article. The polymeric film layer further exhibits a loss tangent greater than about 0.1 when subjected to sinusoidal oscillation in a frequency range less than 40 Hz.

These and other aspects of the disclosure are described more fully below in the Detailed Description taken in conjunction with the accompanying drawings.

Brief Description of the Drawings

FIG. 1 is a perspective view of a packaging containing a plurality of disposable cleaning articles in accordance with the present disclosure;

FIG. 2 is an enlarged side elevation view, in cross-section, of a packaging film in accordance with the present disclosure;

FIG. 3 is a front perspective view of apparatus used to measure sound levels generated by packaging film samples;

FIG. 4 is a rear perspective view of a sound measurement chamber used in the apparatus of FIG. 3;

FIG. 5 is an enlarged front perspective view of the chamber of FIG. 4 with a package film sample clamped therein;

FIG. 6 is a graph of observed loss tangent vs. frequency for two packaging films.

Detailed Description

Various embodiments of an article of commerce having a disposable cleaning article enclosed in a multilayer packaging film are disclosed herein. Materials used to form the multilayer packaging film are selected so that the assembled article of commerce displays the quality, or otherwise conveys the impression, of softness. In particular, the packaging of the article of commerce may have a matte finish and may be formed of materials that exhibit reduced sound levels across a readily audible range of sound frequencies when the article of commerce is handled or manipulated.

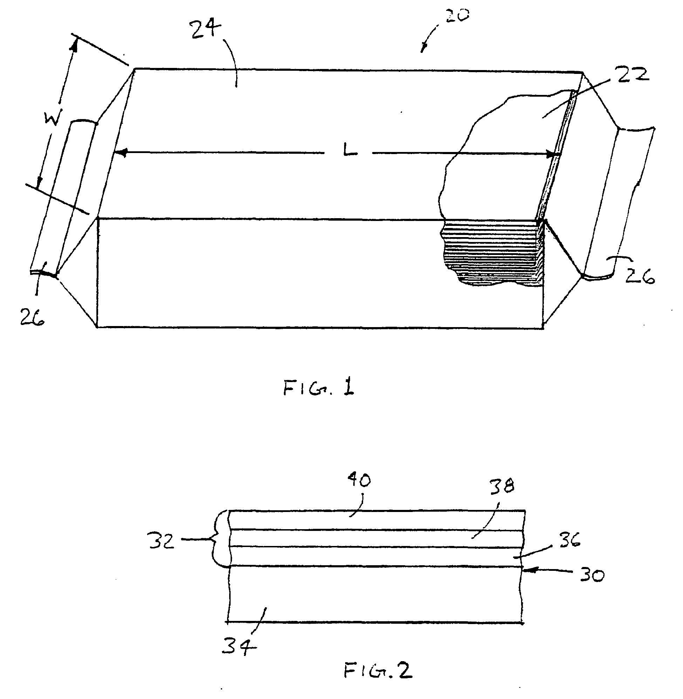

Referring to FIG. 1, an article of commerce in accordance with the present disclosure is identified by reference numeral 20. The article of commerce includes a plurality of disposable cleaning articles 22 enclosed within a package 24. In the illustrated embodiment, the package 24 is formed from a sheet of packaging film that is wrapped around the plurality of disposable cleaning articles 22. Adjacent ends of the packaging film are sealed together to completely enclose the cleaning articles 22. Accordingly, a rear seal (not shown) extends along a length L of the package 24 and two side seams 26 extend across a lateral width W of the package 24. As illustrated in the cut away portion of FIG. 1, the disposable cleaning articles 22 may be in the form of generally planar sheets that are stacked. In alternative embodiments, the package 24 may enclose a single disposable cleaning article 22, or the one or more disposable cleaning articles 22 may be provided in any known shape other than the planar sheets illustrated in FIG. 1. For example, the sheets comprising cleaning articles 22 may be folded along an edge and the folded portions engaged to facilitate removal of an individual sheet from package 24.

The disposable cleaning article 22 may include one or more compositions disposed on a substrate. For example, the cleaning article may be provided as a wet wipe, defined herein as a substrate material having a cleaning composition disposed thereon that is used to cleanse body parts. While the material is typically non-woven and made of synthetic compounds, woven materials as well as natural compounds, either woven or non-woven, may also be used. The substrate material is impregnated with a liquid or semi-liquid composition that may enhance cleaning, provide a smooth feeling, or perform some other function. The composition may include an emollient, a surfactant, an emulsifier, a soothing agent, a rheology modifier, a preservative or preservative system, water, or other component. For examples of each component and additional details regarding substrates and compositions for wet wipes, please see U.S. Patent Application Serial No. 10/878,875, filed on July 9, 2004, and entitled "A Composition for Wet Wipes that Enhances the Efficacy of Cleansing While Being Gentle to the Skin" assigned to the same assignee as the present disclosure, the disclosure of which is incorporated herein by reference. Such wet wipes may have a water content of 50% or more by weight.

Alternatively, the disposable cleaning article 22 may be provided as a primarily "dry" product. For example, a child cleansing mitt may be provided, such as one of those disclosed in U.S. Patent Application Serial No. 10/948,034, entitled "Child's Cleansing System", filed on March 10, 2004, assigned to the same assignee as the present disclosure, the disclosure of which is also incorporated herein by reference. Accordingly, the cleaning article 22 may include a cleaning implement formed in the shape of a mitt and carrying a personal care composition. The mitt may be formed of natural fibers, synthetic fibers, or a combination thereof. Suitable natural fibers include, but are not limited to, cellulosic fibers such as wood pulp fibers, cotton, and rayon. Suitable synthetic fibers include fibers commonly used in textiles including, but not limited to, polyester and polypropylene fibers, polyethylene, polyether, PET, and combinations thereof. The personal care composition may be provided in the form of a paste or dry solid. While such "dry" compositions have a water content, it is typically no more than 10% by weight. Personal care compositions may include a surfactant and one or more adjunct ingredients, as disclosed in greater detail in the '034 application. Other similar "dry" products are disclosed in US Patents 5,620,694; 5,744,149; 5,972,361; 5,980,931; 6,063,397; 6,074,655; 6,132,746; 6,153,208; 6,280,757; 6,338,855; and 6,495,151.

As understood from the foregoing, the disposable cleaning article 22 has a water content. The article 22 may be relatively dry (i.e., having a water content of less than 10%) or relatively wet (i.e., having a water content of 50% or more). While two examples are provided above, various alternative forms of the disposable cleaning article 22 may be used in accordance with the present disclosure that may have other water content values.

The package 24 includes material selected to achieve various characteristics. For example, the package 24 is preferably sealable and has a water vapor transmission rate of less than approximately 5 $g/m^2/day$, thereby to increase shelf life of the disposable cleaning article 22. In addition, the package 24 preferably has an exterior surface exhibiting a "soft" or matte finish. Still further, the package material exhibits reduced sound characteristics when handled or manipulated, thereby contributing to the perception of softness.

A multi layer packaging film has been identified that exhibits all the desired characteristics. As best illustrated in FIG. 2, the multi layer packaging film 30 includes a co-extruded film layer 32 laminated to a polymeric film layer 34. In the illustrated embodiment, the co-extruded layer 32 includes an inner ply 36, central ply 38, and outer ply 40. Each ply 36, 38, 40 of the co-extruded film layer 32 comprises a thermoplastic material, such as polypropylene. The outer ply 40 may include an appearance modification additive to impart a matte finish. Suitable appearance modification additives include but are not limited to calcium carbonate ($CaCO_3$ - including "calcite"), talc, China clay (including "kaolinite"), calcined clay (including "defect spinel"), aluminum trihydrate (including "gibbsite"), magnesium hydroxides (including "brucite"), wollastonite, mica (including "muscovite" and "phlogopite"), silica (including "quartz" and "amorphous"), carbon black, synthetic silica (including "precipitated" and "fumed"), aluminum hydroxides, magnesium carbonate, antimony oxides, precipitated calcium carbonate, and colorants such as $TiO_2$ and inorganics, with $CaCO_3$ being preferred. The polymeric film layer 34 is preferably formed of a material capable of sealing with itself, such as by heat-sealing. Where the polymeric film layer 34 is to heat-sealed, it is preferable that the polymeric film layer material has a melting point at least approximately 20 °C, less than a melting of the co-extruded film layer material. Furthermore, the co-extruded film layer 32 and polymeric film layer 34 need not be formed of the same material. For example, the co-extruded film layer 32 may be formed of polypropylene and the polymeric film layer 34 may be formed of polyethylene.

At least one of the layers used in the multilayer packaging film 30 provides a vapor barrier for substantially retaining the water content of the disposable cleaning article enclosed therein. The multi layer packaging film 30 preferably has a water vapor transmission rate of less than approximately 5 $g/m^2/day$. Furthermore, the co-extruded film layer 32 preferably has an overall thickness of approximately 20 microns when formed with three plies 36, 38, 40 of polypropylene, while the polymeric film layer 34, when provided as polyethylene, preferably has a thickness of approximately 40 microns. Accordingly, in the currently preferred embodiment, the multi layer packaging film 30 has an overall thickness of less than about 100 microns, preferably less than about 75 microns, more preferably less than about 70 microns. In a particularly preferred embodiment multi layer packaging film 30 has an overall thickness of about 60 microns. It will be appreciated that the specific layers of the multi layer packaging film 30 may have different thicknesses and may be provided in different materials.

Material for the outer surface of the multi layer packaging film should be selected to provide a low gloss or matte finish. Specular gloss data was obtained for the currently preferred embodiment of the multi layer packaging film 30 and various prior art films to identify a desired range of reflectances for the outer surface. Specifically, specular gloss values for the various films were determined using ASTM standard test method D-2457-03. This method was used to obtain gloss values for plastic films in the machine direction (MD) and cross direction (CD) for both a 20° and a 60° illumination/view angle. Plastic films are typically processed in web form, and the machine direction is generally understood to indicate the direction in which the web travels during processing while the cross direction is perpendicular to the machine direction and therefore extends laterally across the web. In the finished product, the package 24 will have a length corresponding to one of the machine and cross directions and a width corresponding to the other of the machine and cross directions.

During reflectance testing, a micro-tri-gloss 20/60/80 gloss meter, marketed by BYK-Gardner USA (model 4520, Serial No. 978711), was used to obtain data operating under the automatic dark end gloss calibration against glass standard. The films tested using this procedure and equipment were the currently preferred embodiment (i.e., a three-ply co-extrusion of polypropylene having an overall thickness of 20 microns laminated to a 40 micron thick layer of polyethylene), and films used as packaging materials for commercially available wet wipes including those from Procter & Gamble (Pampers® Baby Wipes). For each film, specular gloss values were recorded three times in the machine direction and three times in the cross direction for both the 20 and 60 degree illuminations/viewing angles. The following table summarized the mean sp ecular gloss values measured in the unprinted white region of each film:

| TABLE 1 - SPECULAR GLOSS DATA | | | | |
|---|---|---|---|---|
| FILM SAMPLE | MD-20 | CD-20 | MD-60 | CD-60 |
| Commercial Wipe Product 1 | 1.3 | 1.3 | 5.7 | 5.6 |
| Commercial Wipe Product 2 | 1.0 | N/A | 3.5 | N/A |
| Commercial Wipe Product 3 | 2.5 | 1.9 | 14.5 | 13.7 |
| Commercial Wipe Product 4 | 3.7 | 3.9 | 19.5 | 20.6 |
| Commercial Wipe Product 5 | 1.4 | 1.4 | 5.4 | 5.2 |
| Pampers® Baby Wipes | 33 | 28 | 80 | 82 |
| Currently Preferred Embodiment | 3 | 3 | 27 | 26 |

Accordingly, it will be seen that the current embodiment exhibits a specular gloss value of less than approximately 4 when illuminated at an incidence angle of 20° along a direction parallel to each of the machine end cross directions and specular gloss values of the less than approximately 30 when illuminated at an incidence angle of 60° along directions parallel to each of the machine and cross directions. Films having specular gloss values within this range provide a sufficient matte finish to suggest the concept of softness to the consumer.

The multi layer packaging film 30 should also exhibit reduced noise characteristics when handled or manipulated to further reinforce the concept of softness to the consumer. While a human is typically sensitive to noises across the audible spectrum of 20 Hz to 20 kHz, there is a narrower band frequencies within this range to which the human is more sensitive. This readily audible range of frequencies is roughly 2 to 5 kHz. Sound generated at this narrower band of frequencies is audible at lower magnitudes, such as 10 decibels, whereas sound generated at frequencies outside this range may not be audible until its magnitude is 60 or more decibels.

The same films used in the gloss data testing were also analyzed to determine noise levels.

| TABLE 2 - SOUND LEVEL DATA | | | |
|---|---|---|---|
| FILM SAMPLE | 5000 Hz | 4000 Hz | 3150 Hz |
| Commercial Wipe Product 1 | 48.0 dB | 53.3 dB | 51.0 dB |
| Commercial Wipe Product 2 | 49.5 dB | 47.9 dB | 51.3 dB |
| Commercial Wipe Product 3 | 42.9 dB | 46.6 dB | 53.5 dB |
| Commercial Wipe Product 4 | 54.8 dB | 55.3 dB | 58.0 dB |
| Commercial Wipe Product 5 | 55.6 dB | 56.2 dB | 54.6 dB |
| Pampers® Baby Wipes | 51.7 dB | 51.8 dB | 54.0 dB |
| Currently Preferred Embodiment | 40.9 dB | 46.6 dB | 48.4 dB |

As can be seen from Table 2, the currently preferred embodiment of the multi-layer packaging film 30 exhibits lower noise levels than any other films at frequencies tested within the readily audible range. Specifically, the currently preferred embodiment of the multi layer packaging film 30 was the only sample to generate less than 50 decibels at the 3150, 4,000, and 5,000 Hz frequencies. It was also the only sample to generate less than 50 decibels at a frequency of 3150 Hz. This lower noise characteristic is desirable to create the perception of softness with the consumer.

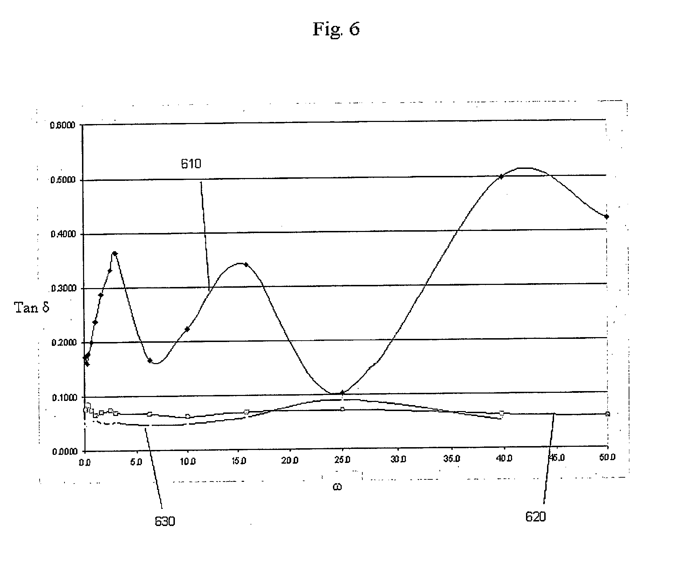

Applicants believe that the lower sound levels generated by the multi layer packaging film 30 are at least in part attributable to the structural characteristics of the film. During dynamic mechanical analysis, the loss tangent (Loss tangent -i.e. tan $\delta$- is a well known characteristic of viscoelastic materials and is defined as the ratio of the loss modulus to the storage modulus) of the currently preferred multi layered packaging film 30 and the previous Procter & Gamble film were compared. The "loss tangent" is a measure of energy dissipation, usually by heat, by a viscoelastic material. FIG. 6 charts the loss tangent of the currently preferred film and the previous Procter & Gamble film with respect to frequency. A higher loss tangent corresponds to increased energy dissipation by heat. Otherwise, such energy would be converted to mechanical energy, including the vibration perceived as noise. Suitably, tan $\delta$ is greater than about 0.1 when measured at frequencies less than about 15 Hz, preferably greater than about 0.13, more preferably greater than about 0.15.

As illustrated by the graph provided at FIG. 6, the loss tangent of the currently preferred film 610, when observed at frequencies below about 40 Hz, is greater than the loss tangent of the previous Procter & Gamble film 620 or the film used to package Commercial Wipe Product 3 (prior art film having the lowest sound level in Table 2). As shown in the graph, the currently preferred film 610 has loss tangent values greater than approximately 0.1000 across the spectrum of tested frequencies, which was 0-50 Hz. Conversely, the previous Procter & Gamble film 620 and the film used for Commercial Wipe Product 3 had loss tangents less than approximately 0.1000 across the same range of frequencies. Normal manipulation and handling of the package 24 occurs at these lower frequencies, and therefore it would be appear that the greater loss tangent of the current film at least in part explains the lower sound levels generated by the current film. Without being bound by theory, it is believed that the higher loss tangent at these lower frequencies means that more of the mechanical energy applied to a package by manual manipulation thereof is dissipated as heat instead of being dissipated by mechanically induced vibration of the film comprising the package which is believed to be the underlying source of any noise generated as a result of the manipulation.

Test Methods

Water Vapor Transmission Rate

Water Vapor Transmission Rate (WVTR) may be suitably measured according to American Society for Testing and Materials Standard Method ASTM F 1249 entitled "Test Method for Water Vapor Transmission Rate Trough Plastic Film and Sheeting Using a Modulated Infrared Sensor." This method is known to those of skill in the art for measuring the permeability of a film by placing a gas with a known temperature and water content on a first or "wet" side of the film and measuring water content on the opposite side of the film. The WVTR values used herein were obtained using a gas on the wet side having ~90% relative humidity and a temperature of ~38 °C.

Sound Level Measurement

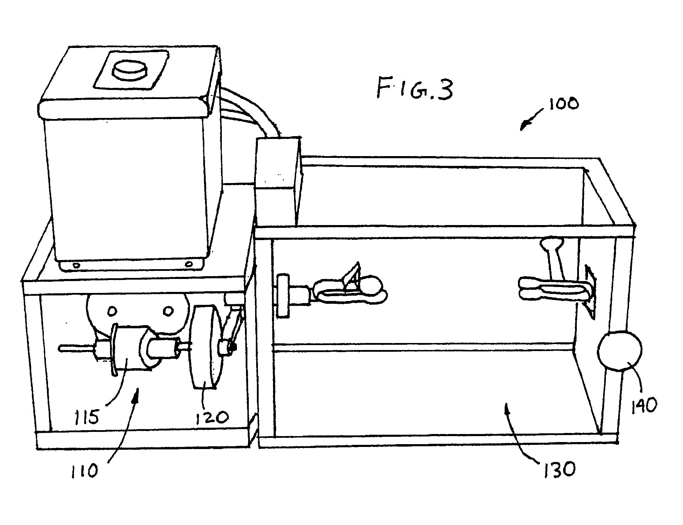

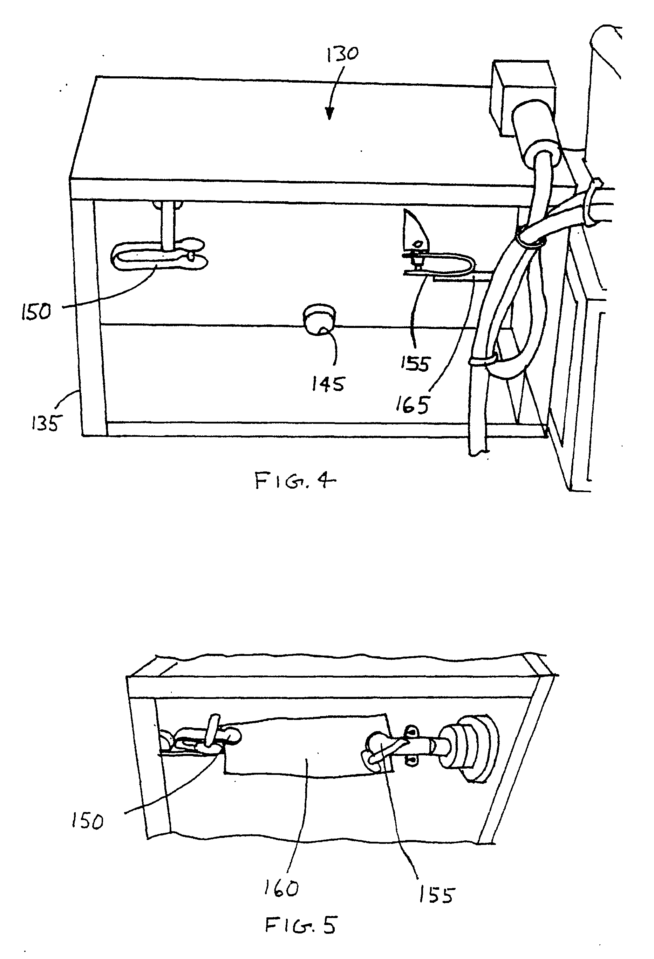

The testing method used is suitable for measuring noise generated by controlled flexing of a sample taken from a web-like structure (e.g., a film or a non-woven material). An audio measuring device, such as the Audio Tool Box™ marketed by TerraSonde of Bolder, Colorado, may be used for measuring sound levels. A suitable sample flexing device 100 is shown in Figs 3-5. As seen most clearly in Fig 3, the device includes a noise measurement chamber 130 and a drive mechanism 110. The drive mechanism 110 is designed to cyclically flex the sample through an angular displacement of 90 degrees at a frequency of 44 cycles/minute. As shown in Figs 3 and 4, the drive mechanism 110 comprises an electric motor 115 and a gear train 120 (which includes a crank mechanism and suitable gearing so as to convert the rotary motion of motor 115 to an oscillating motion) that are integrated to deliver the requisite angular displacement and frequency.

Figure 4 shows the noise measurement chamber 130 in more detail. As can be seen therein, the chamber 130 comprises a rectangular box 135 that is provided with access means 140 (Fig. 3) to allow sample insertion and removal. The box 135 is made from LEXAN (1.27 cm thick) and has interior dimensions of 22.9 cm X 15.2 cm X 12.7 cm (length, width, depth). The box 135 is also provided with sensor orifice 145 (diameter=1.27 cm) for inserting the sensor from the audio measuring device. Inside the box 135 is a sample holding apparatus which comprises a fixed clamp 150 and an opposed, rotatable clamp 155 which is connected to the gear train 120 by shaft 165. The fixed clamp 150 is attached to the end of the box 135 that is opposite to the drive mechanism 110. The axes of clamps 150 and 155 are horizontally and vertically aligned. The leading edges of clamps 150, 155 are separated by a distance of approximately 10 cm. As seen more clearly in Fig. 5, the clamps 150 and 155 have a circular configuration (with a diameter of approximately 18 mm) for gripping the sample 160.

The sample 160 may be prepared using a template and an appropriate cutting device (i.e., scissors or utility knife) to cut rectangular samples from the material to be tested. For the testing described herein, rectangular samples measuring approximately 50.8 mm X 127 mm were cut. Enough samples of each film were cut to run at least 3 tests for each.

The audio measurement device was set-up according to the manufacturer's instructions. Specifically, the "Acoustic Analysis, Real Time Analyzer" mode was used with the following settings:

| | |
|---|---|
| Function: | RTA (Real Time Analyzer) |
| Submenu: | Full (20 Hz-20KHz) |

(continued)

| Octave-Band: | 3 (1/3 Octave Band) |
| Averaging: | 1s (1 second) |
| Input: | MicL (Low Range Microphone Input: 30-95 dB) |
| Display dB Range: | 72-55 |
| Pink Noise Generator: | Off |
| Memory: | Initial dB Settings |

Set-up of the sample flexing device included confirming that the drive mechanism 110 was operating at a frequency of 44 cycles per minute and that the angular displacement during operation was approximately 90 degrees. In addition, the orientation of the clamps 150, 155 was checked to confirm that their open faces were angularly aligned within $\pm 15$ degrees.

For each sample, an ambient sound level was measured to allow the sample sound measurement to be compensated for noise generated by the drive mechanism 110. The ambient sound level may be measured prior to or after evaluation of samples at each frequency of interest. To obtain an ambient sound level, the motor 115 was started and the probe from the audio measurement device was inserted into sensor orifice 145. The distance from the end of the probe to the centerline of the sample was measured and, if necessary, adjusted to be approximately 63.5 mm. The audio measurement device was then set to the first frequency at which sound level was to be measured. After a 5 second stabilization period, the highest decibel reading observed over the next 5 seconds was recorded. The ambient noise measurements were identified by the variable "$AS_{fi}$", where f is the frequency and i is the replicate number. The foregoing was repeated to obtain three decibel measurements. The motor 115 was then turned off, and the audio measurement device was set to the next frequency for sound level measurement. This was repeated until sound level measurements were obtained at the desired frequencies, namely 5000 Hz, 4000 Hz, and 3150 Hz.

To measure the noise level of each sample, first the access means 140 and clamps 150, 155 were opened. A sample was placed on one of the clamps 150, 155 so that it was approximately centered between the clamps, and the clamp was closed. The sample was placed under a slight tension, such as approximately 1 ON, while the other end of the sample was placed in the remaining open clamp, and the remaining clamp was closed. The sample was then visually inspected to ensure that the long edges of the sample were parallel to the axis of clamps 150, 155. In addition, the sample was inspected to ensure that there was less than 15 degrees of skew between the clamps. If not, the position of rotatable clamp 155 was manually rotated. With the sample properly oriented, the access means 140 was closed and the motor 115 was started. The probe of the audio measurement device was inserted into the sensor orifice 145, and the position of the probe was adjusted as needed to obtain a distance from the end of the probe to the centerline of the sample of approximately 63.5 mm. The audio measurement device was set to the first frequency for sound level measurement. After a 5 second stabilization period, the highest decibel reading observed over the next 5 seconds was recorded. The sample sound level measurements are identified as "$S_jS_{fi}$", where j is a material identifier, f is the frequency and i is the replicate number. The foregoing was repeated to obtain sound level measurements for the sample at the other desired frequencies, namely 5000 Hz, 4000 Hz, and 3150 Hz. This process was also repeated for each sample, to obtain a full set of data.

The sound data was then used in well-known algorithms to obtain more meaningful information regarding the sound characteristics of the sample films. First, an average sound level for each frequency was calculated for both ambient sound and sample sound using the formula:

$$S_j S_{fAvg} = (10\log(\Sigma \ 10^{(SjSfi)/10})/n \text{ or } AS_{fAvg} = (10\log(\Sigma \ 10^{(ASfi)/10})/n$$

The average sound level for a sample, corrected for the average ambient sound, for each frequency was then calculated using the formula:

$$C_j S_f = 10(\log \ 10^{(SjSfAvg/10} - 10^{(ASfAvg/10}).$$

Dynamic Mechanical Analysis

Loss tangent is measured using Dynamic Mechanical Analysis (DMA) techniques. In such experiments a sample of a material is exposed to a sinusoidal strain having a predefined frequency (Hz) and the response to that strain is determined. The data may be analyzed to determine the storage modulus (G'), the loss modulus (G") and the loss tangent (tan $\delta$ =G"/G'). In one variation of the DMA test the frequency of the sinusoidal strain is varied over a predefined range and G', G" and $\delta$ are determined for each frequency.

DMA may be performed using a dynamic mechanical analyzer such as a TA Instruments DMA 2980 (hereinafter "DMA 2980"), available from TA Instruments, Inc., of New Castle, Delaware, equipped with a film clamp, Thermal Advantage/Thermal Solutions software for data acquisition, and Universal Analysis 2000 software for data analysis. Many other types of DMA devices exist, and the use of dynamic mechanical analysis is well known to those skilled in the art of polymer and copolymer characterization. Methods of operation, calibration and guidelines for using the DMA 2980 are found in TA Instruments DMA 2980 Operator's Manual issued March 2002, Thermal Advantage User's Reference Guide issued July 2000 and Universal Analysis 2000 guide issued February 2003. To those skilled in the use of the DMA 2980, the following operational run conditions should be sufficient to replicate the stretch and recovery of the samples.

The instrument should be set up according to the manufacturer's instructions. For purposes of evaluating films according to the present invention the following set up conditions should be used with this instrument:

| | |
|---|---|
| Oscillation Amplitude | 15 $\mu$m |
| Static Force | 0.1 N |
| Auto Tension | 130% |
| Frequency Range | 0-50 Hz |
| Sampling | 5 sec/pt |
| Five Points per Decade | |
| Log Mode | |
| Multi-Frequency Mode | |
| Method | Frequency Sweep Isothermal |

Once the experimental conditions are selected on the DMA 2980, the film clamp is mounted onto the DMA 2980 and calibrated according to the User's Reference Guide. The material to be tested is cut into samples of substantially uniform dimension. Appropriate sample dimensions may be selected to achieve the required strain. For the DMA 2980, suitable sample dimensions are approximately 6.4 mm wide by 30 mm long. The floating film clamp of the DMA 2980 is adjusted to a position which provides approximately 6 mm between the clamping surfaces, and is locked in this position. The sample is mounted in the film clamps and the lower clamp is allowed to float to allow determination of the actual gauge length which exists between the film clamps. The sample ID and dimensions are then recorded. Once testing is initiated, DMA data is obtained and recorded. The DMA is performed at 22 °C.

For each sample tested report G' and G". Use the measured values for G' and G'' to calculate tan $\delta$ (=G''/G') which is also reported.

## Claims

1. An article of commerce comprising:

a disposable cleaning article having a water content; and
a package comprising a multilayer packaging film (30) having a thickness of less than 70 microns, said multilayer packaging film (30) including at least:

a co-extruded vapor barrier film layer (32) including an inner ply (36), central ply (38) and outer ply (40), each ply comprising polypropylene; and
a polymeric film layer (34) formed of polyethylene having a melting point at least 20 °C less than the co-extruded vapor barrier film layer (32) laminated to the polymeric film layer (34), wherein the polymeric film layer (34) is sealable to form the package so as to enclose the disposable cleansing article,

wherein said multilayer packaging film (30) has a water vapor transmission rate of less than 5 g/m$^2$/day and substantially retains the water content of the disposable cleaning article and,
and wherein said multilayer packaging film (30) has a loss tangent (tan $\delta$) greater than 0.1 when measured at frequencies less than about 15 Hz according to the Dynamic Mechanical Analysis method described herein and exhibits a corrected sound level of less than 50 decibels at a sound level measurement frequency of approximately 3150 Hz, preferably said multilayer packaging film (30) further exhibits a corrected sound level of less than 50 decibels at sound level measurement frequencies of 4000 and 5000 Hz.

2. The article of claim 1, in which the package has length and width dimensions and an outer surface wherein the multilayer packaging film (30) on the outer surface has a reflectance of less than 4 when illuminated at an incidence angle of 20° along directions parallel to each of the length dimension and the width dimension and less than 30 when illuminated at an incidence angle of 60° along directions parallel to each of the length dimension and the width dimension.

3. The article of claim 2, in which the package outer surface is defined by an outer layer of the co-extruded polypropylene having an appearance modification additive to impart a low reflectance, said appearance modification additive preferably being $CaCO_3$.

4. The article of any of the preceding claims, wherein the inner ply of the co-extruded polypropylene has a higher stiffness than the central and outer layers of the co-extruded polypropylene.

5. The article of claim 1, in which the disposable cleaning article is selected from the group consisting of wet wipes and cleaning implements having a moisture-containing surfactant system disposed on a substrate.

**Patentansprüche**

1. Handelsartikel, umfassend:

einen Einweg-Reinigungsartikel mit einem Wassergehalt und
eine Verpackung, umfassend eine mehrschichtige Verpackungsfolie (30) mit einer Dicke von weniger als 70 Mikrometern, wobei die mehrschichtige Verpackungsfolie (30) mindestens aufweist:

eine coextrudierte Dampfsperrfolie (32), die eine innere Lage (36), mittlere Lage (38) und äußere Lage (40) aufweist, wobei jede Lage Polypropylen umfasst, und
eine Polymerfolienschicht (34), gebildet aus Polyethylen mit einem Schmelzpunkt von mindestens 20 °C unter dem der coextrudierten Dampfsperrfolie (32), die auf die Polymerfolienschicht (34) laminiert ist, wobei die Polymerfolienschicht (34) verschließbar ist, um die Verpackung zu bilden, sodass der Einweg-Reinigungsartikel umschlossen ist,

wobei die mehrschichtige Verpackungsfolie (30) eine Wasserdampfübertragungsrate von weniger als 5 g/m$^2$/Tag aufweist und im Wesentlichen den Wassergehalt des Einweg-Handelsartikels zurückhält und
wobei die mehrschichtige Verpackungsfolie (30), gemessen mit dem hierin beschriebenen dynamisch-mechanischen Analyseverfahren bei Frequenzen von weniger als ca. 15 Hz, eine Verlusttangente (tan $\delta$) von mehr als 0,1 aufweist und bei einer Schallpegel-Messfrequenz von ca. 3150 Hz einen korrigierten Schallpegel von weniger als 50 Dezibel zeigt, und die mehrschichtige Verpackungsfolie (30) ferner bei Schallpegel-Messfrequenzen von 4000 und 5000 Hz vorzugsweise einen korrigierten Schallpegel von weniger als 50 Dezibel zeigt.

2. Gegenstand nach Anspruch 1, bei dem die Verpackung eine Längen- und Breitenabmessung und eine Außenoberfläche aufweist, wobei die mehrschichtige Verpackungsfolie (30) auf der Außenoberfläche bei Beleuchtung in einem Einfallswinkel von 20° entlang der Richtungen parallel zu jeder der Längenabmessung und der Breitenabmessung einen Reflexionsgrad von weniger als 4 und bei Beleuchtung in einem Einfallswinkel von 60° entlang der Richtungen parallel zu jeder der Längenabmessung und der Breitenabmessung von weniger als 30 aufweist.

3. Gegenstand nach Anspruch 2, bei dem die Außenoberfläche der Verpackung durch eine Außenschicht des coextrudierten Polypropylens definiert ist, die einen Zusatzstoff zur Veränderung des Aussehens aufweist, um einen niedrigen Reflexionsgrad zu verleihen, wobei der Zusatzstoff zur Veränderung des Aussehens vorzugsweise $CaCO_3$ ist.

4. Gegenstand nach einem der vorstehenden Ansprüche, wobei die innere Lage des coextrudierten Polypropylens eine höhere Steifigkeit als die mittlere und äußere Schicht des coextrudierten Polypropylens aufweist.

5. Gegenstand nach Anspruch 1, bei dem der Einweg-Reinigungsartikel ausgewählt ist aus der Gruppe bestehend aus Feuchttüchern und Reinigungsvorrichtungen mit einem Feuchtigkeit enthaltenden Tensidsystem, das auf einem Trägermaterial angebracht ist.

**Revendications**

1. Article du commerce comprenant :

   un article de nettoyage jetable ayant une teneur en eau ; et
   un conditionnement comprenant un film de conditionnement multicouche (30) <u>ayant une épaisseur inférieure à 70 microns</u>, ledit film de conditionnement multicouche (30) incluant au moins :

   une couche co-extrudée de film de barrière à la vapeur ; et (32) <u>incluant une couche interne (36), une couche centrale (38) et une couche externe (40), chaque couche comprenant du polypropylène ;</u> et
   une couche de film polymère (34) <u>formé de polyéthylène</u> ayant un point de fusion au moins 20 °C inférieur à la couche co-extrudée de film de <u>barrière à la vapeur</u> (32) stratifiée à la couche de film polymère (34), dans lequel la couche de film polymère (34) est scellable pour former le conditionnement de façon à entourer l'article de nettoyage jetable,

   dans lequel ledit film de conditionnement multicouche (30) a un taux de transmission de la vapeur d'eau inférieur à 5 g/m$^2$/jour et conserve essentiellement la teneur en eau de l'article de nettoyage jetable et,
   <u>dans lequel ledit film de conditionnement multicouche (30) a une tangente de perte (tan $\delta$) supérieure à 0,1 lorsqu'on mesure à des fréquences inférieures à environ 15 Hz selon le procédé d'analyse mécanique dynamique décrit ici et</u> présente un niveau sonore corrigé inférieur à 50 décibels à une fréquence de mesure de niveau sonore d'approximativement 3150 Hz, de préférence ledit film de conditionnement multicouche (30) présente en outre un niveau sonore corrigé inférieur à 50 décibels à des fréquences de mesure de niveau sonore de 4000 et 5000 Hz.

2. Article selon la revendication 1, dans lequel le conditionnement a des dimensions en longueur et en largeur et une surface externe, dans lequel le film de conditionnement multicouche (30) sur la surface externe a une réflectance inférieure à 4 lorsqu'il est éclairé selon un angle d'incidence de 20° le long de directions parallèles à chacune parmi la dimension en longueur et la dimension en largeur et inférieure à 30 lorsqu'il est éclairé selon un angle d'incidence de 60° le long de directions parallèles à chacune parmi la dimension en longueur et la dimension en largeur.

3. Article selon la revendication 2, dans lequel la surface externe du conditionnement est définie par une couche externe du polypropylène co-extrudé ayant un additif de modification d'apparence pour communiquer une faible réflectance, ledit additif de modification d'apparence étant de préférence CaCO$_3$.

4. Article selon l'une quelconque des revendications précédentes, dans lequel la couche interne du polypropylène co-extrudé a une rigidité plus élevée que les couches centrale et externes du polypropylène co-extrudé.

5. Article selon la revendication 1, dans lequel l'article de nettoyage jetable est choisi dans le groupe constitué de lingettes humides et ustensiles de nettoyage ayant un système tensioactif contenant de l'humidité disposé sur un substrat.

FIG. 1

FIG. 2

FIG.3

130

150

135

145

155

165

FIG. 4

150

160

155

FIG. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6521338 B
- WO 01100716 A
- US 87887504 A
- US 94803404 A
- US 5620694 A
- US 5744149 A
- US 5972361 A
- US 5980931 A

- US 6063397 A
- US 6074655 A
- US 6132746 A
- US 6153208 A
- US 6280757 A
- US 6338855 A
- US 6495151 A

### Non-patent literature cited in the description

- TA Instruments DMA 2980 Operator's Manual. March 2002

- *Thermal Advantage User's Reference Guide,* July 2000
- *Universal Analysis 2000,* February 2003